**Europäisches Patentamt**

(19) **European Patent Office**

**Office européen des brevets**

(11) Publication number: **0 112 150**
**B1**

(12) **EUROPEAN PATENT SPECIFICATION**

(45) Date of publication of patent specification: **07.06.89**

(51) Int. Cl.⁴: **F 02 D 33/02, F 02 D 41/18**

(21) Application number: **83307555.9**

(22) Date of filing: **12.12.83**

(54) **Method for controlling an air flow quantity.**

(30) Priority: **13.12.82 JP 218121/82**
**13.12.82 JP 218122/82**

(43) Date of publication of application:
**27.06.84 Bulletin 84/26**

(45) Publication of the grant of the patent:
**07.06.89 Bulletin 89/23**

(84) Designated Contracting States:
**DE FR GB**

(56) References cited:
**EP-A-0 053 464**
**FR-A-2 214 925**
**FR-A-2 415 725**
**FR-A-2 475 131**
**US-A-4 173 205**

(73) Proprietor: **MIKUNI KOGYO KABUSHIKI KAISHA**
**13-11, Sotokanda 6-chome**
**Chiyoda-ku Tokyo (JP)**

(72) Inventor: **Kamiyama, Shuichi**
**Honkomagome 2-4-5**
**Bunkyo-ku Tokyo-to (JP)**

(74) Representative: **Woodin, Anthony John et al**
**Fitzpatricks Europe House Box No. 88 World**
**Trade Centre East Smithfield**
**London E1 9AA (GB)**

Courier Press, Leamington Spa, England.

## Description

The present invention relates to a method of controlling an air flow quantity to be supplied to an internal combustion engine in an air supply quantity controlling system for such an engine.

The air supply to an internal combustion engine for automobiles and the like is conventionally controlled by opening or shutting a throttle valve mechanically connected to an accelerator pedal through a movement transmitting mechanism by a driver depressing the accelerator pedal. By opening or shutting the throttle valve with an actuator of the electric, pneumatic, oil pressure or similar type, it is also thought to electrically detect the motion of the accelerator pedal, to calculate and process this detection signal by an electronic control unit, such as, a computer or the like, taking the operating state of the engine into consideration and to operate the actuator so as to be able to obtain an air flow quantity necessary for the internal combustion engine. By this sort of controlling mechanism, it is partly practised to hold the revolution speed constant in the idling operation and to hold the air-fuel ratio (A/F value) constant. Furthermore, it has been attempted to similarly control the air flow quantity in all operating conditions. However, in a fuel supply device of a known air supply quantity controlling system, the air flow quantity passing the throttle valve provided with an actuator, is able to be calculated and controlled with an air detecting means, for example, an air flow sensor, or with the actually-measured value of air quantity according to the operating conditions of an associated internal combustion engine. Incidentally, air flow sensors for automobiles are so designed that their manufacturing is difficult and their construction is complicated, because a high measuring accuracy is required and, therefore, the manufacturing costs increase, their responsiveness deteriorates because they are arranged separately from their associated engine bodies and they are easily influenced by the intake system of the engines, a pressure loss is caused because they act as a resistance in the air flow path, they occupy a large space and an increase of the weight of the automobiles is introduced. On the other hand, in a system to determine an air flow quantity referring to an actually-measured value from the operating condition of the internal combustion engine, for example, from the intake manifold pressure and the number of revolutions of the engine, the air flow sensor having various defects as mentioned above is not needed. It is, however, difficult to adjust the air flow quantity so as to always maintain high accuracy, because the influence of the irregularity of the properties of the engine and the changes with time are large. Further, it is extremely problematic in practice that a great amount of the actually measured data is needed to be accumulated and controlled in accordance with the properties set up according to the kind and purpose of the engine. Furthermore, in the adjustment of air quantity at the A/F control, as the opening degree of the throttle valve is increased or decreased by a servomechanism, so that the output value from the exhaust gas sensor is to be a desired value, it is not necessary to detect the adjusted quantity of air. This is, however, essentially different from the control of air quantity for controlling the engine output since the quantity of air to be adjusted is small and it brings forth no change to the engine of such a degree that a driver is able to feel it.

FR—A—2 475 131 discloses an automatically controllable mixture supply for an internal combustion engine, wherein an electronic control, fuel injection system controls the air flow rate as a function of fuel flow rate by transmitting an operator's depression stroke of the accelerator pedal to a fuel selecting mechanism which determines the fuel rate and supplies the fuel flow rate signal to a computer, together with various correction information, so that the computer can calculate the optimum air flow rate and output a control signal for opening the throttle valve with a servo-mechanism. The correction information may be ambient pressure and/or temperature, engine temperature and/or exhaust conditions. The computer, which is preferably a micro-processor, is also arranged to control exhaust gas recirculation and ignition timing.

An earlier prior art document, namely, FR—A—2 214 925, describes a fixed word or data storage arrangement, with interpolation facilities and for use with an internal combustion engine control system, wherein such arrangement includes two fixed word stores which are operable in respective calculating cycles and which can store respective control values for controlling the ignition time and duration of fuel injection of the engine. The control values are dependent upon the revolution duration and the throttle valve position of the engine, which parameters constitute independent variables and are represented by digital input words, as discussed below.

Generally, this known data storage arrangement comprises a fixed word store for storing values of a function which is dependent upon one or more independent variables, as mentioned above, each represented by a respective digital input word of higher and lower order bits, the values of the function being stored at locations characterised by the higher order bits and an arrangement for interpolating between stored values of the function. The interpolation arrangement has a counter with binary outputs which are assigned to the independent variables in such a manner that each variable is assigned a number of respective binary outputs equal to the number of lower order bits of the independent variable-representing, digital input word. Also included is means for determining a calculating cycle and for causing the counter to pass consecutively through all its counter states during such cycle and, in respect of each independent variable, a comparator which compares a first number represented by the lower order bits with a second number dependent upon the counter state and represented at the counter outputs assigned to the independent variable. The arrangement further includes means for applying the higher order bits to the fixed word store unchanged when the second number is greater than or equal to the first number and with the number represented by the higher order bits increased by one when the second number is less than the first number, as well as including means for accumulating values of the function, each value being produced at an output of the fixed word store when a respective counter state is passed through during the calculating cycle, to provide an accumulated value which is proportional to an interpolated value of the function.

It has been found, however, that such prior art arrangements have a number of associated disadvantages and drawbacks, in that they are also comparatively expensive to manufacture, occupy a large amount of room, are complicated to adapt to any engine's particular requirements and, as a consequence, tend to be comparatively unsophisticated in performance, as well as tending to exhibit undesirably slow response times under certain operating conditions.

Thus, an object of the presently inventive method is to ensure as far as possible that the air flow quantity to be supplied into the cylinder of an internal combustion engine is always able to be adjusted into a desired air flow quantity substantially without time delay.

Another object of the present invention is to provide a method of controlling an air flow quantity to be supplied to an internal combustion engine in an air supply quantity controlling system which is not under the influence of the difference of engine properties, which is simple in its formation, which is able to be manufactured with low cost which is easily capable of high speed control of air quantity but which is not in need of an air flow sensor, and which overcomes, or at least substantially reduces, the other disadvantages associated with the arrangements of the prior art references discussed above.

This object is attained, according to the present invention, by providing a method of controlling an air flow quantity to be supplied to an internal combustion engine in an air supply quantity controlling system for an internal combustion engine in which:

(a) the air flow quantity supplied to the internal combustion engine is controlled by a throttle valve (12) driven through a computer (3);

(b) the functional relationship among the opening degree ($\theta$) of the throttle valve, the pressure difference ($\Delta P$) between the upstream and downstream sides of the throttle valve and the air flow quantity ($QA$) which passes through the throttle valve, is stored in the memory of the computer as a combination of discrete values in the form of a three-dimensional map; and

(c) the pressure difference ($\Delta P$) and the opening degree ($\theta$) are detected by respective sensor means, with the values detected by the sensor means being recognised by the computer, characterised in that, in order to realize a desired air flow quantity, ($QA_F$) to be supplied to the engine, starting from a state defined by initial values ($\theta_1$, $\Delta P_1$, $QA_1$) of the throttle valve opening degree, pressure difference and air flow quantity respectively, the following steps are performed:

(i) The three-dimensional map is accessed with the two following parameters:
—the initial value ($\Delta P_1$) of the pressure difference,
—the desired air flow ($QA_F$),
and the corresponding value of the throttle valve opening degree ($\theta_2$) is read out;

(ii) the throttle valve is driven into the position corresponding to the value ($\theta_2$) read out at step (i), whereby the actual pressure difference is modified;

(iii) the actual pressure difference value ($\Delta P_3$) is sensed, and the following steps are then successively and repetitively performed, until the desired air flow ($QA_F$) is obtained;

(iv) the air flow quantity value corresponding to the actual throttle valve opening degree and the actual pressure difference value is read out from the three-dimensional map;

(v) if the air-flow quantity value read out at step (iv) differs from the desired air flow ($QA_F$), the following steps are further performed:

(vi) the three-dimensional map is accessed with the two following parameters:
—the actual value of the pressure difference,
—the desired air flow ($QA_F$),
and the corresponding value of the throttle valve opening degree is read out;

(vii) the throttle value is driven into the position corresponding to the throttle valve opening degree read out at step (vi), whereby the pressure difference is modified; and

(viii) the actual pressure difference value is sensed, whereby any step of accessing the three-dimensional map with two parameters in order to read out the third parameter includes calculating this third parameter value by an interpolation based upon the discrete values of the access parameters, between which the actual access parameters are comprised, and upon the corresponding discrete values of the third parameter.

According to a preferred embodiment of the presently inventive method and when the air flow quantity to be supplied to the engine is required to be rapidly varied from an initial air flow quantity to a desired air flow quantity, an estimated pressure difference between the upstream and downstream sides of the throttle valve to realize the desired air flow quantity ($QA_2$) is first determined from the ratio of the initial air flow quantity ($QA_1$) to the desired air flow quantity ($QA_2$) and then an estimated opening degree of the throttle valve is determined from the desired air flow quantity ($QA_2$) and the estimated pressure difference and the throttle valve is actuated so that an actual throttle valve opening degree ($\theta$) coincides with said estimated opening degree.

Objects of the present invention will become more apparent during the course of the following detailed description which is given by way of example and should be read in conjunction with the accompanying drawings in which:

Figure 1 is a schematic view of a fuel supply device adapting an air supply quantity control system according to the method of the present invention;

Figure 2 is a sectional view showing an example of an air control actuator for use in the presently inventive method;

Figure 3 is a sectional view along the III—III line of Figure 2;

Figure 4 is a schematic view showing a reference opening degree detecting mechanism;

Figures 5, 8 and 9 are views showing air flow quantity characteristics;

Figure 6 is a diagram showing the map stored in a computer in case the control according to Figure 5 is effected;

Figure 7 is an explanatory view of an interpolation calculation based on the map shown in Figure 6;

Figures 10, 11 and 12 are diagrams showing the control status of the throttle valve opening degree, air flow quantity passing the throttle valve and air flow quantity to be supplied to a cylinder; and

Figure 13 is an explanatory view of control by an estimated opening degree of the throttle valve.

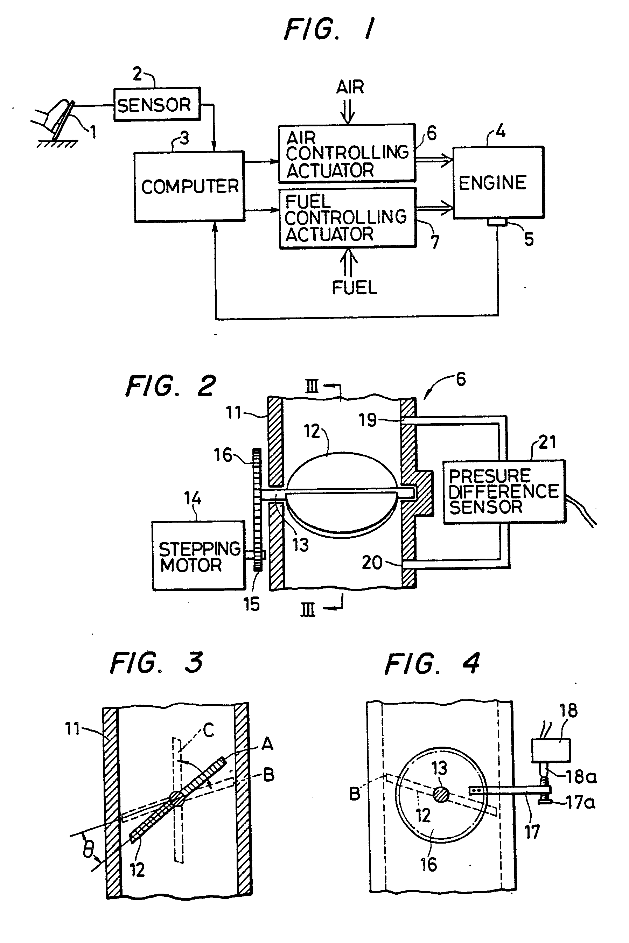

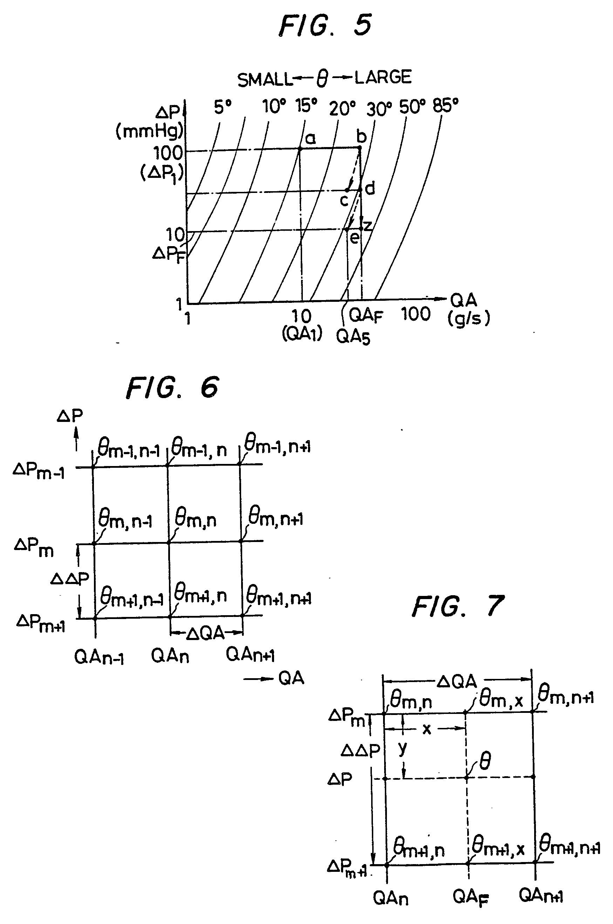

Referring firstly to Figures 1 to 4, the numeral 1 is an accelerator pedal, 2 is a sensor to detect the depressed position of the accelerator pedal 1, 3 is a computer for receiving the electric signal generated by the sensor 2 in accordance with the depressed position of the accelerator pedal 1. Computer 3, also, receives the signals from a plurality of sensors 5 provided on an engine 4 for detecting the various operating status of the engine. Actuator 6 is an air controlling actuator to control the air flow quantity to be supplied within the engine 4, and 7 is a fuel controlling actuator to control the fuel to be supplied into the engine 4. Figures 2 to 4 show the details of the air controlling actuator 6 according to the present invention. The numeral 11 is an intake tube, 12 is a throttle valve fixed on a shaft 13 which is rotatably supported on the intake tube 11 within the intake tube 11. On the one end of the shaft 13 is attached a gear 16 to mesh with a gear 15 fixed on the shaft of a stepping motor 14. The throttle valve 12 is adapted to be adjusted in a predetermined opening degree by the movement of the stepping motor 14. By the way, the opening degree $\theta$ of the throttle valve 12 (the opening degree at the position A in Figure 3) is an angle from the position B to the position A by taking the position just before the throttle valve 12 is completely closed as the reference opening degree 0°. Accordingly, the angle becomes $\theta$ max at the fully opened position. In case $\theta$=0° or at the position B, the air flow quantity is smaller than the minimum air flow quantity to be required for the engine. The reference opening degree position B is detected when a stop screw 17a of a lever 17 attached on the gear 16 contacts an operating pin 18a of a switch 18 as shown in Figure 4. The reference opening degree can also be detected by an absolute position sensor, not shown, assembled inside the motor 14 or on the throttle shaft 13. By way, in Figure 4, the reference opening degree position B is adjustable by the stop screw 17a attached on the lever 17. Opening 19 is a pressure detection port provided on the upstream side of the throttle valve 12 of the intake tube 11, 20 is a pressure detection port provided on the downstream side of the throttle valve 12 of the intake tube 11, 21 is a pressure difference sensor connected to the two pressure detection ports 19 and 20 with a pressure transmitting pipe to detect the pressure difference $\Delta P$ and to output this in the form of an electric signal to the computer 3. The abovementioned air flow quantity characteristic of the throttle valve 12 is shown in Figure 5, in which the abscissa represents the air flow quantity QA and the ordinate the pressure difference $\Delta P$, respectively, in a logarithmic scale. In this case, the reference opening degree position B of the throttle valve 12 is inclined by 5° with respect to a plane perpendicular to the air flow path and therefore the angle $\theta$ comes to be $\theta°\leqq\theta\leqq85°$.

Next, the operation of the abovementioned device shall be explained.

In Figure 5, when $\Delta P$=100 mmHg and $\theta$=15°, QA=10 g/s (the point a). Since this is decided linearly, $\theta$=15 is necessary so that QA=10 g/s and $\Delta P$=100 mgHg hold. Now, if the air flow quantity to be taken into the engine 4 has the value $QA_1$ at the point a (in this case, $\Delta P$=$\Delta P_1$ and $\theta$=$\theta_1$), the engine needs the air flow quantity $QA_F$ which is larger than the $QA_1$ when a driver depresses the accelerator pedal 1. However, as the pressure difference is $\Delta P_1$ when the accelerator pedal 1 is to be depressed, the opening degree of throttle valve 12 necessary at this moment is $\theta_2$ shown by the intersecting point b of $\Delta P_1$ with an airflow quantity of $QA_F$. But, when the opening degree of throttle valve 12 is opened from $\theta_1$ to $\theta_2$, the pressure difference becomes smaller to be $\Delta P_3$ (the point c) because the resistance in the flow path within the intake tube 11 decreases. Accordingly, the quantity of air flow actually passing the throttle valve 12 is $QA_3$ which is smaller than $QA_F$. Further, to realize the air flow quantity $QA_F$, the abovementioned operation is similarly repeated in the point d ($\Delta P_3$, $QA_F$, $\theta_4$), the point e ($\Delta P_5$, $QA_5$, $\theta_4$) and finally arrives at the point z ($\Delta P_F$, $QA_F$, $\theta_F$). As this calculation is effected using the computer 3, the time length from the measurement of the pressure difference to the completion of the calculation of the value of the throttle valve opening degree by which the predetermined throttle valve opening degree is adjusted by the air controlling actuator 6 is extremely short. Accordingly, the adjustment is not practically effected along the course shown by the point a→the point b→the point c→the point d ... but along the course shown by the point a→the point b→the point z as shown by the real line in Figure 5.

By the way, such air flow quantity characteristic as shown in Figure 5 is stored in the computer 3 but, as the values of pressure difference P, air flow quantity QA and throttle valve opening degree $\theta$ are analogical values and their combinations are infinite, it is almost impossible to store all of them. Accordingly, in the computer 3, the pressure difference $\Delta P$ and the air flow quantity QA are digitally plotted as are the values of the throttle valve opening degree $\theta$ corresponding to the respective combinations between the values of the pressure difference and air flow quantity. This is hereinafter called $\theta$ map. Values of throttle valve opening degree corresponding to the combinations between the pressure difference and air flow quantity not existing in this $\theta$ map may be calculated by an interpolation. That is to say, when the desired pressure difference $\Delta P_F$ and air flow quantity $QA_F$ are between $\Delta P_m$ and $\Delta P_{m+1}$, $QA_n$ and $QA_{n+1}$ respectively, $Q_{m,x}$ and $Q_{m+1,x}$ are firstly obtained from the difference x between $QA_F$ and $QA_n$ by, for example, a proportional division and $\theta_F$ between $\theta_{m,x}$ and $Q_{m+1,x}$ is next obtained from the difference y between $\Delta P_F$ and $\Delta P_m$. Namely,

$$\theta_{m,x}=\theta_{m,n}+(\theta_{m,n+1}-\theta_{m,n})\frac{x}{\Delta QA}$$

$$\theta_{m+1,x}=\theta_{m+1,n}+(\theta_{m+1,n+1}-\theta_{m+1,n})\frac{x}{\Delta QA}$$

$$\theta_F=\theta_{m,x}+(\theta_{m+1,x}-\theta_{m,x})\frac{y}{\Delta\Delta P}$$

Here, they are calculated from

$$\Delta QA=QA_{n+1}-QA_n \text{ and } \Delta\Delta P=\Delta P_{m+1}-\Delta P_m.$$

Accordingly, when the driver depresses the accelerator pedal 1, the position thereof is coupled to the computer 3 by the sensor 2. The computer 3 computes the proper throttle valve opening degree $\theta_F$ from the pressure difference and air flow quantity coupled from the sensors 5 provided on the engine 4, compares it with the opening degree $\theta_0$ at that moment detected by an unillustrated detecting means and gives to the motor driving circuit, the necessary pulse number and the direction of revolution so that the stepping motor 14 is driven in order to attain the proper throttle valve opening degree $\theta_F$. Thus, the throttle valve opening degree $\theta_F$ to give the desired pressure difference $\Delta P_F$ and the desired air flow quantity $QA_F$ is realized.

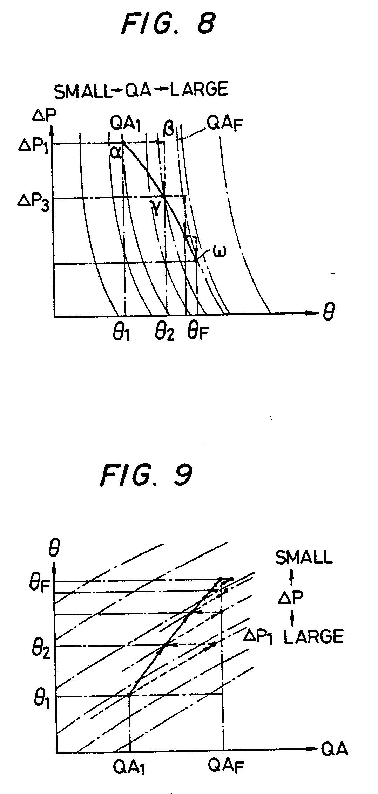

Figure 8, where the abscissa represents the throttle valve opening degree $\theta$ and the ordinate the pressure difference $\Delta P$ in logarithmic scales, shows the air flow quantity characteristic in the case where the air flow quantity QA is a parameter and the values of QA (QA map) in response to the respective combinations of the values $\Delta P$ and $\theta$ digitally plotted are memorized. In this case, the desired air flow quantity $QA_F$ becomes necessary by the depression of the accelerator pedal 1 from the position $\alpha$ ($\Delta P_1$, $\theta_1$, $QA_1$) but, if the changing amount of the throttle valve opening degree $\theta$ is to be decided on the basis of the quantitative relation between $QA_1$ and $QA_F$, $\theta$ changes from $\theta_1$ to $\theta_2$ and tends to advance from the position $\beta$ to the position $\alpha$, and arrives at the position $\gamma$ because the flow path resistance within the intake tube 11 decreases by the increase of the opening degree of throttle valve 12. Here, the computer 3 computes the air flow quantity $QA_3$ at the position $\gamma$ and, in case $QA_3$ is not the desired air flow quantity $QA_F$, this action will be repeated. Thus, the desired air flow quantity $QA_F$ is attained at the position $\omega$. Also in this case, the actual control is effected as shown with the real line in Figure 8.

Similarly, in case the air flow quantity QA is represented as an abscissa and the opening degree $\theta$ as a ordinate in logarithmic scales as shown in Figure 9, and the throttle valve opening degree $\theta$ is increased as a function of the difference between the actual pressure difference and the desired pressure difference in accordance with the air flow quantity characteristic when the pressure difference $\Delta P$ is taken as its parameter, the desired air flow quantity $QA_F$ is obtained in the way shown with the real line. In this case, the values of pressure difference $\Delta P$ ($\Delta P$ map) corresponding to the respective combinations between the throttle valve opening degree $\theta$ and air flow quantity QA when $\theta$ and QA are digitally plotted are stored in the computer 3.

By the way, the control of the air flow quantity using the above $\theta$ map, QA map or $\Delta P$ map was described for the case of increasing the air flow quantity. It functions, however, similarly also in the case of decreasing the air flow quantity and, as the control is always effected for comparing directly or indirectly the air flow quantity at the present time point and the desired air flow quantity in case the desired air flow quantity is continuously changing, it is able to be efficiently effected.

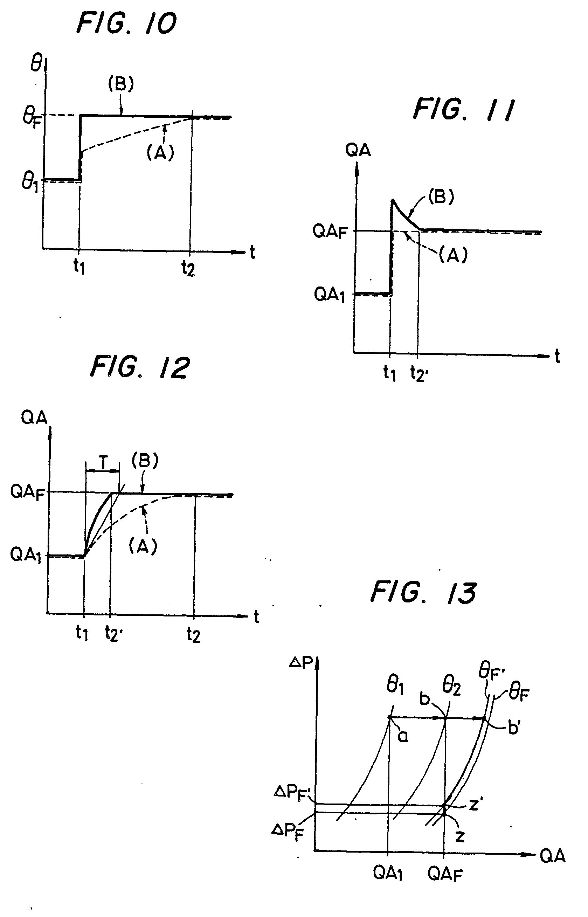

As described above, in the control of the air flow quantity using any one of $\theta$ map, QA map or $\Delta P$ map, the throttle valve opening degree $\theta$ is adjusted from $\theta_1$ to $\theta_F$ during the time length $(t_2-t_1)$ as shown with the broken line (A) in Figure 10 and the air flow quantity QA passing within the intake tube 11 is made to arrive substantially instantaneously to the desired value $QA_F$ as shown with the broken line (A) in Figure 11. However, because of the delay factors existing in the intake system of engine or the time delay of the change of the manifold pressure $P_M$ caused by the inner volume of the intake manifold and the air flow quantity $QA_C$ with which the cylinder sucks are proportional to the product of this manifold pressure $P_M$ and the revolution number N of the engine, the air flow quantity $QA_C$ with which the cylinder sucks has a time delay with respect to the air flow quantity passing within the intake tube 11. Accordingly, even when the air flow quantity $QA_F$ necessary for the engine is controlled so as to pass within the intake tube 11, the air flow quantity $QA_C$ with which the cylinder actually sucks does not instantaneously come to be $QA_F$ as shown with the broken line (A) in Figure 12. This does not cause a substantial problem in case the change from the first air flow quantity $QA_1$ to the desired quantity $QA_F$ is small but, in case this change is large, it causes the delay of the engine response and deteriorates the driving feeling of the automobile. Here, the relation between $QA$ and $QA_C$ is able to be approximately expressed by the following equations:

$$\frac{QA_C}{QA} = \frac{1}{TS+1}, \quad T=K \cdot \frac{V_M}{N} \quad (1)$$

where T represents the time delay constant (seconds), K the constant, $V_M$ the volume of the manifold, N the revolution number of the engine and S the Laplace operator. According to these equations, when the air flow quantity to pass within the intake tube 11 is changed stepwise or as shown in Figure 11(A) by depressing the accelerator pedal 1 stepwise, as the air flow quantity $QA_C$ with which the cylinder sucks changes as shown in Figure 12(A) gently by the linear time delay, the power response of the engine delays correspondingly. For this, by making the air flow quantity flow into the intake tube 11 surpass a normal value for a short time for depressing the accelerator pedal 1, the air flow quantity $QA_C$ with which the cylinder is going to suck arrives at the desired value $QA_F$ more quickly (refer to Figure 11(B)). By the way, $QA_C$ is substantially proportional to the absolute pressure $P_M$ of the manifold and the revolution number N of the engine. Namely,

$$QA_C=C \cdot P_M \cdot N$$

(C: the constant according to a kind of the engine)

Further, $P_M$ is the value of when the pressure difference $\Delta P$ between the up- and down-streams of the throttle valve 12 is subtracted from the intake absolute pressure $P_A$ of the upstream side of the throttle valve 12. Namely,

$$P_M=P_A-\Delta P \quad (3)$$

From the equations (2) and (3),

$$QA_C=C(P_A-\Delta P)N \quad (4)$$

Thus, when the air flow quantity is desired to quickly change from $QA_1$ to the desired value $QA_F$ in Figure 13, because the speed of the change is sufficiently quick in comparison with the change of the revolution number N of the engine and the revolution number of the engine during the transit time is thought to be substantially constant, from the equation (4),

$$QA_1=C(P_A-\Delta P_1)N \quad (5)$$

$$QA_F=C(P_A-\Delta P_{F\prime})N \quad (6)$$

hold, and

$$\Delta P_{F\prime}=P_A-\frac{QA_F}{QA_1}(P_A-\Delta P_1) \quad (7)$$

is obtained. This signifies that the pressure difference is to be $\Delta P_{F\prime}$ when the air flow quantity is changed from $QA_1$ to $QA_F$ when the revolution number N is supposed to be constant. The throttle valve opening degree to give the air flow quantity $QA_F$ in this case is computed to be $\theta_{F\prime}$ from $QA_F$ and $\Delta P_{F\prime}$. Accordingly, when a necessary air flow quantity is changed from $QA_1$ to $QA_F$ by depressing the accelerator pedal 1, if the opening degree $\theta_{F\prime}$ is simultaneously commanded to set the throttle valve 12 from the computer 3, the adjusting operation is effected from the point $a$ to the point $b'$ and further to the point $z'$ along the progress of time in Figure 13, the air flow quantity to pass within the intake tube 11 comes temporarily to be a value larger than the desired value $QA_F$, as shown in Figure 11(B), and the air flow quantity $QA_C$ with which the cylinder sucks arrives to $QA_F$ in a shorter time as shown with the real line (B) in Figure 12. Here, because strictly seeking, $\theta_{F\prime}$ is different from $\theta_F$, a control error occurs if $\theta_{F\prime}$ is maintained for a long time. Accordingly, after the air flow quantity has arrived at the desired value $QA_F$, the error is eliminated by commanding the throttle valve 12 to be set at the opening degree $\theta_F$ determined by the pressure difference at the present time point and the desired air flow quantity and the air flow quantity $QA_F$ by the correct throttle valve opening degree $\theta_F$ is obtained. This time length or $(t_{2\prime}-t_1)$ is able to make a function of the time constant T because the delay time of the supply of $QA_C$ is determined by the time constant T of the equation (1) and this delay time is so extremely short as to be 0.1 sec through 0.3 sec and is shorter when N is larger to be advantageous from the point of view of the flow quantity error. In case the action speed of the throttle valve 12 is comparatively slow, it is preferred to maintain the command value $\theta_{F\prime}$ or not to return to the normal control until the actual opening degree of the throttle valve 12 arrives at the desired value $\theta_F$. The above explanation is made for the case where the air flow quantity is increased, but the adjusting operation is able to be similarly effected also in the case of decreasing the air flow quantity. Further, at the estimate of the throttle valve opening degree $\theta_{F\prime}$, it is possible to more quickly bring the air flow quantity $QA_C$ with which the cylinder sucks to $QA_F$ by bringing the desired air flow quantity instantaneously to a value larger than $QA_F$ and in this case, the differential value of the command value of the air flow quantity is advantageously used for the control. Thus, by controlling the air flow quantity to pass within the intake tube 11 by estimating the desired opening degree, the air flow quantity is quickly brought to the desired value $QA_F$ and the responsiveness of the engine is able to be improved.

A stepping motor is used to adjust the throttle valve opening degree θ in the above explanation but, by detecting the opening degree θ with a rotary encoder, potentiometer and the like and putting the signal into the computer, the air flow quantity may be controlled with a servomechanism using a direct or alternating current motor as a motor to adjust the opening degree. Further, the control speed is able to be optionally preset by the algorithm of the computer or the driving speed of the motor to be used. Because the fuel supply quantity and air flow quantity are controlled by the computer, the controls of the engine revolution speed, vehicle speed, air-fuel ratio and the like and various controls such as the optimum control of the engine and the like may be effected only with the formation of the present invention by changing the program.

**Claims**

1. A method of controlling an air flow quantity to be supplied to an internal combustion engine in an air supply quantity controlling system for an internal combustion engine in which:

(a) the air flow quantity supplied to the internal combustion engine is controlled by a throttle valve (12) driven through a computer (3);

(b) the functional relationship among the opening degree (θ) of the throttle valve, the pressure difference (ΔP) between the upstream and downstream sides of the throttle valve and the air flow quantity (QA) which passes through the throttle valve, is stored in the memory of the computer as a combination of discrete values in the form of a three-dimensional map; and

(c) the pressure difference (ΔP) and the opening degree (θ) are detected by respective sensor means, with the values detected by the sensor means being recognised by the computer, characterised in that, in order to realize a desired air flow quantity, (QA_F) to be supplied to the engine, starting from a state defined by initial values (θ_1, ΔP_1, QA_1) of the throttle valve opening degree, pressure difference and air flow quantity respectively, the following steps are performed:

(i) The three-dimensional map is accessed with the two following parameters:
— the initial value (ΔP_1) of the pressure difference,
— the desired air flow (QA_F),
and the corresponding value of the throttle valve opening degree (θ_2) is read out;

(ii) the throttle valve is driven into the position corresponding to the value (θ_2) read out at step (i), whereby the actual pressure difference is modified;

(iii) the actual pressure difference value (ΔP_3) is sensed, and the following steps are then successively and repetitively performed, until the desired air flow (QA_F) is obtained:

(iv) the air flow quantity value corresponding to the actual throttle valve opening degree and the actual pressure difference value is read out from the three-dimensional map;

(v) if the air-flow quantity value read out at step (iv) differs from the desired air flow (QA_F), the following steps are further performed:

(vi) the three-dimensional map is accessed with the two following parameters:
— the actual value of the pressure difference,
— the desired air flow (QA_F),
and the corresponding value of the throttle valve opening degree is read out;

(vii) the throttle valve is driven into the position corresponding to the throttle valve opening degree read out at step (vi), whereby the pressure difference is modified; and

(viii) the actual pressure difference value is sensed, whereby any step of accessing the three-dimensional map with two parameters in order to read out the third parameter includes calculating this third parameter value by an interpolation based upon the discrete values of the access parameters, between which the actual access parameters are comprised, and upon the corresponding discrete values of the third parameter.

2. A method according to Claim 1, wherein, when the air flow quantity to be supplied to the engine is required to be rapidly varied from an initial air flow quantity (QA_1) to a desired air flow quantity (QA_2), an estimated pressure difference between the upstream and downstream sides of the throttle valve to realize the desired air flow quantity (QA_2) is first determined from the ratio of the initial air flow quantity (QA_1) to the desired air flow quantity (QA_2) and then an estimated opening degree of the throttle valve is determined from the desired air flow quantity (QA_2) and the estimated pressure difference and the throttle valve is actuated so that an actual throttle valve opening degree (θ) coincides with said estimated opening degree.

**Patentansprüche**

1. Verfahren zur Steuerung einer Luft-Strömungsmenge, welche einer Verbrennungskraftmaschine zugeführt werden soll, in einem Steuersystem zur Luftmengenversorgung für eine solche Verbrennungskraftmaschine, bei der:

(a) die Luftströmungsmenge, welche der Verbrennungskraftmaschine zugeführt wird, durch ein Drosselventil (12) gesteuert wird, das mit Hilfe eines Komputers (3) angesteuert wird;

(b) die funktionelle Beziehung zwischen dem Öffnungswinkel (θ) des Drosselventils, der Druckdifferenz (ΔP) zwischen der Stromeingangs- und der Stromausgangsseite des Drosselventils und der Luftströmungsmenge (QA), die durch das Drosselventil strömt, im Speicher des Komputers als eine Kombination diskreter Werte in Form einer dreidimensionalen Abbildung gespeichert wird; und

(c) die Druckdifferenz (ΔP) und der Öffnungswinkel (θ) werden durch entsprechende Sensoren erfaßt, wobei die von den Sensoren aufgenommenen Werte durch den Komputer erkannt werden, dadurch gekennzeichnet, daß zur Realisierung einer gewünschten Luftströmungsmenge (QA$_F$), welche der Maschine zugeführt werden soll, von einem Zustand ausgegangen wird, der durch die Anfangswerte ($\theta_1$, $\Delta P_1$, QA$_1$) des Öffnungswinkels des Drosselventils, der Druckdifferenz und der Luftströmungsmenge entsprechend definiert ist, die folgenden Schritte durchgeführt werden:

(i) Auf die dreidimensionale Abbildung wird mit den folgenden Parametern zugegriffen:

—dem Anfangswert ($\Delta P_1$) der Druckdifferenz,

—der gewünschten Luftströmung (QA$_F$),

und der entsprechende Wert des Öffnungswinkels des Drosselventils ($\theta_2$) wird ausgelesen;

(ii) das Drosselventil wird in die Position gebracht, welche dem Wert ($\theta_2$) entspricht, der nach Verfahrensschritt (i) ausgelesen wird, wobei die tatsächliche Druckdifferenz modifiziert wird;

(iii) der tatsächliche Wert ($\Delta P_3$) der Druckdifferenz wird erfaßt und die folgenden Schritte werden sodann fortlaufend und wiederholend durchgeführt, bis der gewünschte Luftstrom (QA$_F$) erreicht wird:

(iv) der Wert der Luftströmungsmenge, welcher dem tatsächlichen Öffnungswinkel des Drosselventils entspricht und der Wert der tatsächlichen Druckdifferenz werden aus der dreidimensionalen Abbildung herausgelesen;

(v) wenn der Wert der Luftströmungsmenge, der gemäß Verfahrensschritt (iv) herausgelesen wird, sich von der gewünschten Luftströmung (QA$_F$) unterscheidet, werden die folgenden Schritte weiter durchgeführt:

(vi) Auf die dreidimensionale Abbildung wird mit den folgenden Parametern zugegriffen:

—dem tatsächlichen Wert der Druckdifferenz,

—dem gewünschten Luftstrom (QA$_F$),

und der entsprechende Wert des Öffnungswinkels des Drosselventils wird ausgelesen;

(viii) das Drosselventil wird in die Position gebracht, welche dem Öffnungswinkel des Drosselventils entspricht, wobei die Druckdifferenz modifiziert wird; und

(viii) der Wert der tatsächlichen Druckdifferenz wird erfaßt, wobei jeder Schritt des Zugriffs zur dreidimensionalen Abbildung mit zwei Parametern, um den dritten Parameter auszulesen, die Berechnung des Wertes dieses dritten Parameters durch eine Interpolation umfaßt, welche auf die diskreten Werte der Zugriffsparameter beruht, zwischen denen die tatsächlichen Zugriffsparameter vorliegen, und auf die entsprechenden diskreten Werte des dritten Parameters.

2. Verfahren nach Anspruch 1, mit dem Kennzeichen, daß, wenn die Luftströmungsmenge, welche der Maschine zugeführt werden soll, es erforderliche macht, diese von einer Anfangsluftströmungsmenge (QA$_1$) zu einer gewünschten Luftströmungsmenge (QA$_2$) schnell verändert werden muß, so wird zuerst eine geschätzte Druckdifferenz zwischen der Strömungseingangs- und der Strömungsausgangsseite des Drosselventils, zur Realisierung der gewünschten Luftströmungsmenge (QA$_2$), aus dem Verhältnis der Anfangsluftströmungsmenge (QA$_1$) zur gewünschten Luftströmungsmenge (QA$_2$) bestimmt, und sodann wird ein geschätzter Öffnungswinkel des Drosselventils aus der gewünschten Luftströmungsmenge (QA$_2$) und der geschätzten Druckdifferenz bestimmt und das Drosselventil wird betätigt, so daß ein tatsächlicher Öffnungswinkel ($\theta$) des Drosselventils mit dem geschätzten Öffnungswinkel übereinstimmt.

**Revendications**

1. Procédé de commande du débit d'air à appliquer à un moteur à combustion interne dans un système de commande du débit d'air appliqué pour un moteur à combustion interne dans lequel:

(a) le débit d'air appliqué au moteur à combustion interne est commandé par une vanne de distribution (12) entraînée par l'intermédiaire d'un ordinateur (3);

(b) la relation fonctionnelle entre le degré d'ouverture ($\theta$) de la vanne de distribution, la différence de pression ($\Delta P$) entre les côtés amont et aval de la vanne de distribution et le débit d'air (QA) qui traverse la vanne de distribution, est mémorisée dans la mémoire de l'ordinateur sous la forme d'une combinaison de valeurs discrètes constituant un réseau tridimensionnel; et

(c) la différence de pression ($\Delta P$) et le degré d'ouverture ($\theta$) sont détectés par des moyens détecteurs respectifs, les valeurs détectées par les moyens détecteures étant reconnues par l'ordinateur, caractérisé par le fait que, afin d'obtenir un débit d'air désiré (QA$_F$) à appliquer au moteur, en partant d'un état défini par des valeurs initiales ($\theta_1$, $\Delta P_1$, QA$_1$) du degré d'ouverture de la vanne, de la différence de pression et du débit d'air respectivement, les opérations suivantes sont effectuées:

(i) le réseau tri-dimensionnel est accédé au moyen des deux paramètres suivants:

—la valeur initiale ($\Delta P_1$) de la différence de pression,

—le débit d'air souhaité (QA$_F$),

et la valeur correspondante du degré d'ouverture de la vanne de distribution ($\theta_2$) est lue;

(ii) la vanne de distribution est entraînée dans la position qui correspond à la valeur ($\theta_2$) lue à l'opération (i), de sorte que la différence réelle de pression est modifiée;

(iii) la valeur réelle de la différence de pression ($\Delta P_3$) est détectée, et les opérations suivantes sont effectuées successivement et plusieurs fois, jusqu'à obtenir le débit d'air (QA$_F$) souhaité:

(iv) la valeur du débit d'air correspondant au degré réel d'ouverture de la vanne de distribution et à la valeur réelle de la différence de pression est lue dans le réseau tri-dimensionnel;

(v) si la valeur de débit d'air lue à l'opération (iv) diffère du débit souhaité (QA$_F$), les opérations suivantes sont encore effectuées:

(vi) le réseau tri-dimensionnel est accédé au moyen des deux paramètres suivants:

—la valeur réelle de la différence de pression,

—le débit d'air désiré (QA$_F$),

et la valeur correspondante du degré d'ouverture de la vanne est lue;

(vii) la vanne de distribution est entraînée dans la position correspondant au degré d'ouverture de vanne de distribution lu à l'opération (vi), de sorte que la différence de pression est modifiée; et

(viii) la valeur réelle de la différence de pression est détectée, de sorte qu'une quelconque opération d'accès au réseau tri-dimensionnel au moyen de deux paramètres pour lire le troisième paramètre comporte le calcul de la valeur de ce troisième paramètre par une interpolation basée sur les valeurs discrètes des paramètres d'accès, entre lesquels sont situés les paramètres réles d'accès, et sur les valeurs discrètes correspondantes du troisième paramètre.

2. Procédé selon la revendication 1, dans lequel, quand le débit d'air à introduire dans le moteur doit être modifié rapidement d'une valeur initiale de débit $(QA_1)$ à une valeur souhaitée de débit $(QA_2)$, une différence estimative de pression entre les côtés amont et aval de la vanne de distribution pour obtenir le débit d'air désiré $(QA_2)$ est d'abord déterminée à partir du rapport entre le débit d'air initial $(QA_1)$ et le débit d'air souhaité $(QA_2)$, puis un degré d'ouverture estimatif de la vanne de distribution est déterminé d'après le débit d'air désiré $(QA_2)$ et la différence estimative de pression et la vanne de distribution est manoeuvrée de façon à ce qu'un degré $(\theta)$ réel d'ouverture de la vanne de distribution coïncide avec ledit degré estimatif d'ouverture.

FIG. 1

FIG. 2

FIG. 3

FIG. 4

## FIG. 5

## FIG. 6

## FIG. 7

## FIG. 8

SMALL ◄─ QA ─► LARGE

## FIG. 9

FIG. 10

FIG. 11

FIG. 12

FIG. 13